# EUROPEAN PATENT SPECIFICATION

(11) **EP 2 067 407 B1**
(45) Date of publication and mention of the grant of the patent: **25.08.2010**
(21) Application number: 08170264.9
(22) Date of filing: 28.11.2008
(51) Int. Cl.: A23G 9/12, H05B 1/02

(54) **Machine for producing liquid or semiliquid food products.**
Maschine zur Herstellung von flüssigen oder halbflüssigen Lebensmittelprodukten.
Machine de fabrication de produits alimentaires liquides ou semi-liquides

(30) Priority: 30.11.2007 IT BO20070789
(43) Date of publication of application: 10.06.2009
(73) Proprietor: ALI S.p.A. - Carpigiani Group, 40011 Anzola Emilia (IT)
(72) Inventor: Cocchi, Gino, 40137 Bologna (IT); Zaniboni, Gianni, 40037 Borgonuovo di Sasso Marconi (Bologna) (IT); Lazzarini, Roberto, 42100 Reggio Emilia (IT)
(74) Representative: Ghioni, Carlo Raoul Maria

(56) References cited:
- EP-A- 0 293 026
- EP-A- 0 496 441
- EP-A- 1 421 857
- WO-A-98/54979

## Description

The present invention relates to a machine for making liquid and semi-liquid food products, such as ice creams and creamy pastry making products. More particularly, the present invention relates to a machine for making liquid and semi-liquid food products of the type known with the technical term "Compact", that is to say, machines in which there is a heat treatment cylinder or cooker with a horizontal axis positioned above a whipping and freezing cylinder, also having a horizontal axis. In processes for making ice creams and creamy pastry making products, the basic ingredients of the mixture, in particular milk and its byproducts, are first heat treated and then whipped and frozen.

In "Compact" type machines, such operations are carried out inside the same machine, putting into fluid communication the cooker outfeed and the whipping and freezing cylinder infeed.

In particular, the heat treatment or cooking chamber normally consists of a hollow cylinder in which the basic products are inserted by means of a suitable hopper.

The cooking chamber is equipped with electric heating elements in contact with the outside on the wall of the cooking cylinder, said heating elements providing the heat needed for the heat treatment or cooking process. Inside the cooking cylinder there is also a mixer which continuously mixes the food products in such a way that the heat is evenly distributed in them.

Similarly, the whipping and freezing cylinder consists of a hollow cylinder inside which there is a mixer.

The hollow cylinder of the whipping and freezing cylinder is surrounded by a coil, or comprises suitable cavities, in which an operating fluid of a refrigerating machine flows so that the mixture of products in the whipping and freezing cylinder is evenly cooled.

Prior art "compact" machines allow a significant reduction in the times needed to make ice cream shop and pastry shop food products, since the pasteurised product does not have to be drawn and collected in tanks then be poured into the whipping and freezing cylinder.

Moreover, such machines perform a very hygienic processing process, since the semi-finished product in the cooker is transferred directly to the whipping and freezing cylinder without being handled by operators.

All of EP 1 421 857, EP 096 441 and WO 98/54979 relate to "compact" type ice cream machines.

However, the prior art machines for making liquid and semi-liquid food products briefly described above have several disadvantages.

Prior art machines can only make one type of product at a time.

In other words, one must wait until the whipping and freezing cylinder has completed its operating cycle and the finished product has been drawn out of it before being able to transfer another product from the cooker into the whipping and freezing cylinder.

This limitation results in poor machine operating flexibility.

Moreover, the machines cannot be made to operate with just any product loads, since, for example, with product loads that are too low the cooker heating elements would supply too much heat, resulting in deterioration of the product being made.

This limitation also results in poor machine operating flexibility.

Also, if one wanted to implement recipes to make special products which require controlled but sudden changes in the whipping and freezing temperature, the whipping and freezing cylinder would provide poor modularity in the mixture cooling temperatures, since it would necessitate waiting for transients that are too long to bring the temperature in the whipping and freezing cylinder to the desired values.

The technical purpose of the present invention is therefore to propose a machine or making liquid and semi-liquid food products which is more versatile than the prior art machines.

In particular, the present invention has for an aim to provide a machine for making liquid and semi-liquid food products which can make different products simultaneously.

The present invention also has for an aim to propose a machine for making liquid and semi-liquid food products which can operate with any basic product loads.

The present invention has for another aim to provide a machine for making liquid and semi-liquid food products which can implement complex recipes requiring frequent and sudden temperature changes in the mixture present in the whipping and freezing cylinder.

Accordingly, the invention achieves the technical purpose and the aims specified with a machine for making liquid and semi-liquid food products which has the technical features described in one or more of the appended claims.

The technical features of the invention are clearly described in the claims below and its advantages are more apparent from the detailed description which follows, with reference to the accompanying drawings which illustrate a preferred, non-limiting embodiment of the invention provided merely by way of example, and in which:

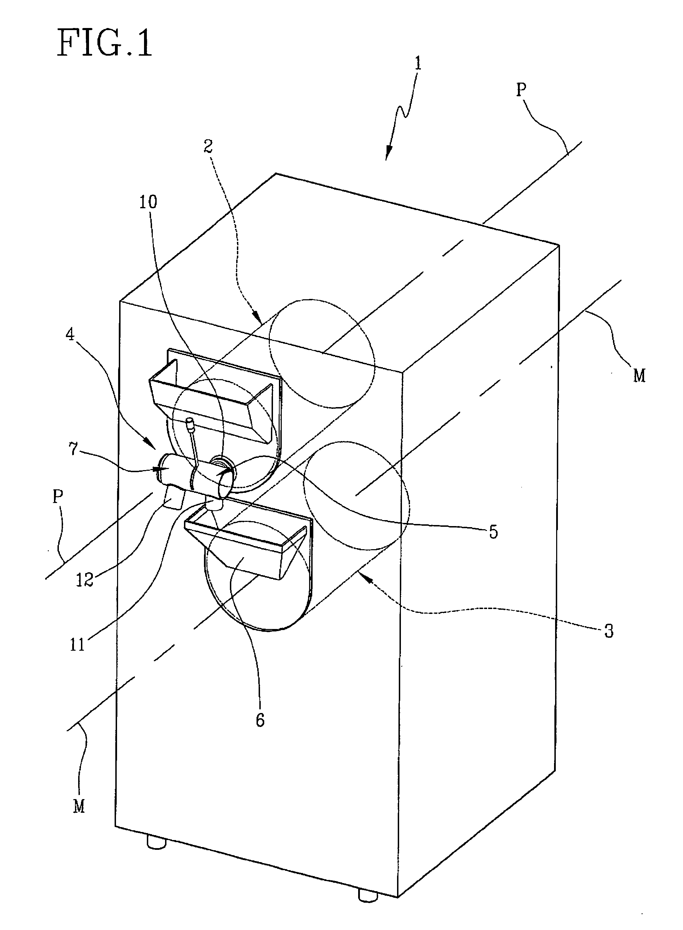

- Figure 1 illustrates a machine for making liquid and semi-liquid food products in accordance with the present invention;
- Figure 2 is a first exploded detail of the machine of Figure 1;
- Figure 3 is a cross-section along the plane III - III of the detail of Figure 2;
- Figure 4 is a perspective view of a second detail of the machine of Figure 1;
- Figure 5 is a diagram of an operating circuit of the detail of Figure 4; and
- Figure 6 is a diagram of an operating circuit of a third detail of the machine of Figure 1.

With reference to the accompanying drawings, the numeral 1 denotes as a whole a machine for making liquid and semi-liquid food products in accordance with the present invention.

In the context of this invention, the terms liquid and semi-liquid food products refer to food products such as ice creams and pastry making creams.

The machine 1 comprises a cooker 2 with a horizontal axis P, a whipping and freezing cylinder 3 with a horizontal axis M positioned below the cooker 2 and a feed line 4 comprising a first dispenser 5 for putting into fluid communication a cooker 2 outfeed and a whipping and freezing cylinder 3 infeed.

The cooker 2 is designed to rapidly heat the product mixture (for example, mixtures for ice cream) to a predetermined temperature, normally between 65°C and 90°C, and to keep the mixture at said temperature for a predetermined period of time.

This process is designed, amongst other things, to reduce the bacterial load in the mixture, to facilitate mixing of the ingredients of which the mixture consists and to obtain good mixture uniformity.

The whipping and freezing cylinder 3 is designed to freeze the water contained in the mixture and simultaneously to incorporate air in the mixture. To promote both the heat treatment or cooking process and the whipping and freezing process, the cooker 2 and the whipping and freezing cylinder 3 are equipped with respective blade-shaped mixers (not illustrated) designed to continuously mix the mixture being processed, with speeds of rotation which may vary from 30 to 200 revolutions per minute.

The feed line 4 allows the semi-finished product to be transferred directly, without going into pouring containers, from the cooker 2 outfeed to the whipping and freezing cylinder 3.

For this purpose, the dispenser 5 pours the mixture coming out of the cooker 2 into a whipping and freezing chamber 3 infeed hopper 6. Advantageously, the feed line 4 comprises a second dispenser 7 for putting into fluid communication the cooker 2 and the outside environment.

The first and second dispensers 5, 7 comprise respective independent activation means 8.

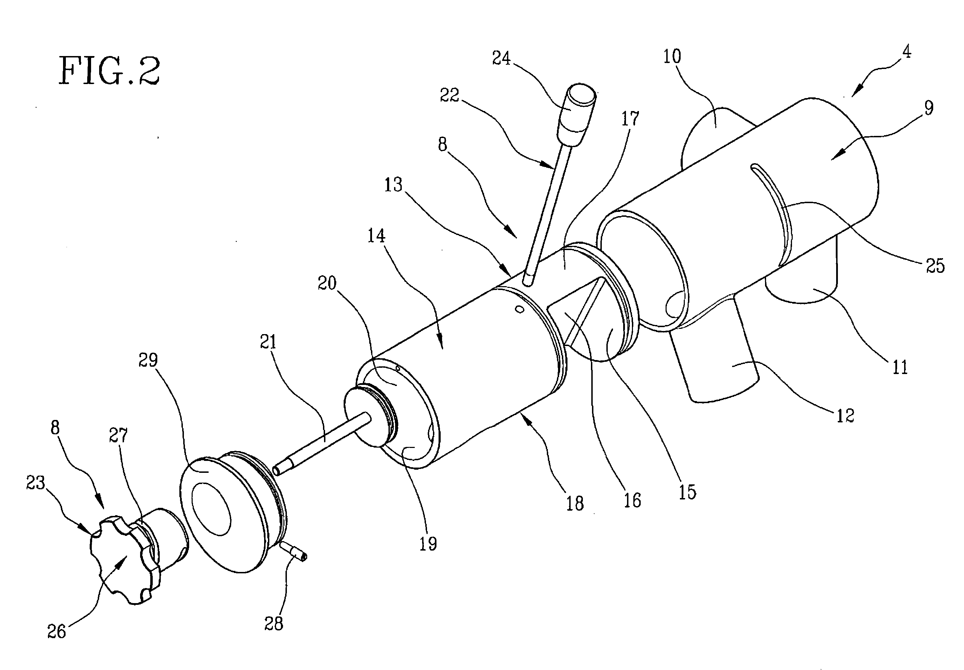

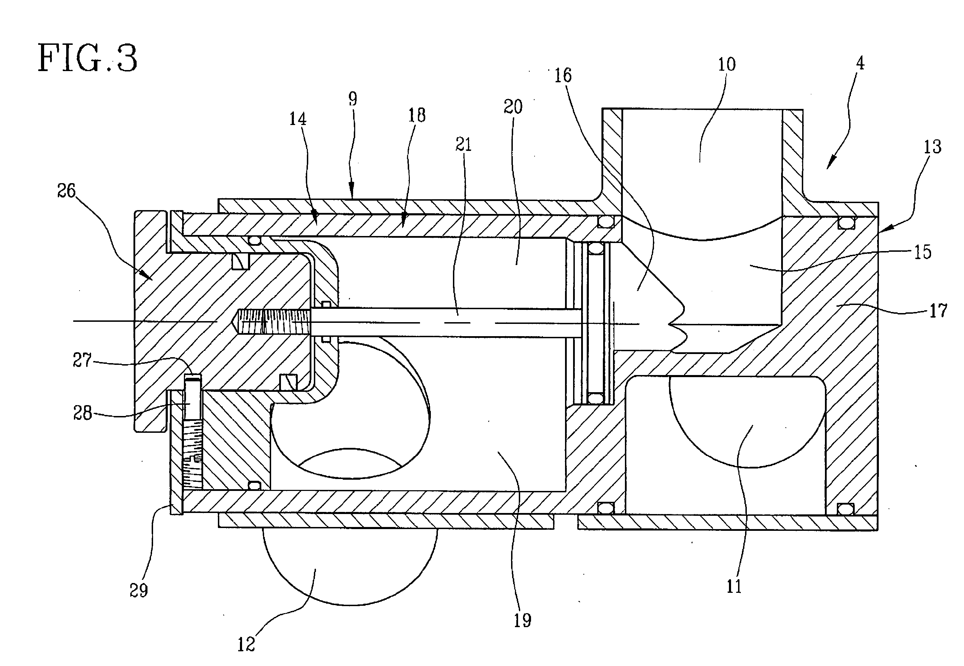

In particular, as shown in Figures 2 and 3, the feed line 4 comprises a containment body 9 which puts into fluid communication the single cooker 2 outfeed 10 with a first nozzle 11 leading directly to the whipping and freezing cylinder 3 hopper 6 and with a second nozzle 12 leading to the outside environment.

Inside the containment body 9 there is a first shutter 13 and a second shutter 14.

The first shutter 13 inhibits, chokes or leaves completely open the fluid communication between the cooker 2 outfeed 10 pipe and the first nozzle 11. Similarly, the second shutter 14 inhibits, chokes or leaves completely open the fluid communication between the cooker 2 outfeed 10 pipe and the second nozzle 12.

The shutter 14 of the second dispenser 7 at least partly consists of a portion of the first shutter 13, so as to keep the feed line 4 dimensions compact.

In particular, the shutter 13 of the first dispenser 5 comprises a transit chamber 15 which can be moved between a first position in which it simultaneously leads to both the cooker 2 outfeed 10 pipe and the nozzle 11 of the first dispenser 5, and a second position in which it leads to the cooker outfeed 10 pipe and to the shutter 14 of the second dispenser 7.

In the second position, the transit chamber 15 interrupts the fluid communication between the cooker 2 outfeed 10 pipe and the nozzle 11 of the first dispenser 5.

It should be noticed that the transit chamber 15 is always in fluid communication with the cooker 2 outfeed 10 pipe, irrespective of its operating position.

As Figure 2 shows, the transit chamber 15 consists of a recess 16 in a solid portion 17 of a cylinder 18.

Said cylinder 18 is inserted in the containment body 9 which is also cylindrical and which is hollow.

Rotation of the cylinder 18 along its main axis of extension, and in particular of the recess 16 in the solid portion 16 of it, causes the transit chamber 15 of the first shutter 13 to pass between the first and second position and vice versa, enabling and disabling the passage of mixture from the cooker 2 to the whipping and freezing cylinder 3.

The shutter 14 of the second dispenser 7 comprises a transit chamber 19 in permanent fluid communication between the transit chamber 15 of the first shutter 13 and the nozzle 12 of the second dispenser 7.

As Figures 2 and 3 show, the transit chamber 19 of the second shutter 14 consists of a hollow portion 20, adjacent to the solid portion 17 of the cylinder 18. Said hollow portion 20 leads to the recess 16 which forms the transit chamber 15 of the first shutter 13.

A closing element 21 can be moved between a first position in which it interrupts the fluid communication between the two transit chambers 15, 19, and a second position in which it leaves open the communication between the two transit chambers 15, 19.

The above-mentioned means 8 for activating the dispensers comprise a first movement element 22 for moving the transit chamber 15 of the first shutter 13 and a second movement element 23 for moving the closing element 21 of the second dispenser 14. The movement elements 22, 23 are separate and can be activated separately.

In particular, the first movement element 22 comprises a lever 24 connected to the cylinder 18 along a direction substantially perpendicular to the direction of the main axis of extension of the cylinder.

The lever 24 passes through a slot 25 in the containment body 9 which acts as an end of stroke element for lever 24 sliding.

In practice, when the lever 24 is moved along the slot 25, the first shutter 13 rotates inside the containment body 9, moving the transit chamber 15 to its operating positions.

The second movement element 23 comprises a rotary knob 26 connected along its own axis of rotation to the closing element 21 of the second transit chamber 19 (Figure 2).

The axis of rotation of the knob 26 is parallel or coincides (in the preferred embodiment it is parallel) with the axis of rotation of the cylinder 18.

The rotary knob 26 comprises a spiral slot 27 engaged by a pin 28 which is integral with the containment body 9.

When the knob 26 is rotated relative to the containment body 9, the pin 28 slides in the spiral slot 27, moving the knob away from the containment body.

In this way, the closing element 21 moves away from the position in which it closes the first transit chamber 15, thus putting the two transit chambers 15, 19 into fluid communication.

In the preferred embodiment, a plug 29 closes the end of the containment body 9 where the knob 26 is present.

To activate dispensing of mixture from the cooker 2 to the whipping and freezing cylinder 3, the transit chamber 15 is moved using the lever 24, putting the outfeed 10 pipe into fluid communication with the first nozzle 11.

In this configuration, keeping the closing element 21 in the closed position, the liquid mixture does not reach the second nozzle 12.

To activate mixture dispensing to the outside environment and not to the whipping and freezing cylinder 3, the lever 24 is moved to the first nozzle 11 closed position and the rotary knob 26 is rotated so as to move the closing element 21 to the position allowing communication between the two transit chambers 15, 19.

The cooking cylinder 2 comprises at least three heating elements 30 extending parallel with the central axis of the cooking cylinder 2, at its lateral wall 31.

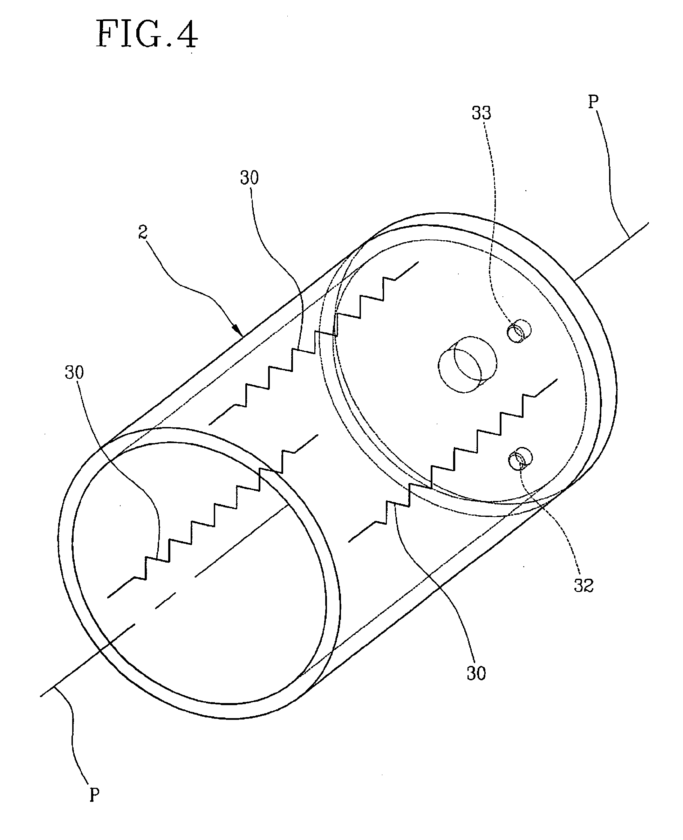

As shown in Figure 4, the three heating elements 30 are separated from each other by angles of between 60 and 120 degrees relative to the central axis of the cooking cylinder 2 and they are powered independently.

In the preferred embodiment, the three heating elements 30 are separated by 90°. One of the heating elements is positioned at the bottom of the tank formed by the cooking cylinder 2.

The heating elements 30 extend along the entire length of the cooking cylinder 2 and, in the preferred embodiment, they consist of adhesive electric heating elements.

A temperature sensor 32 and a level sensor 33 are positioned at least partly inside the cooking cylinder 2 and are designed to send signals STP, SLP indicating the temperature and level values detected in the mixture present in the cooker 2.

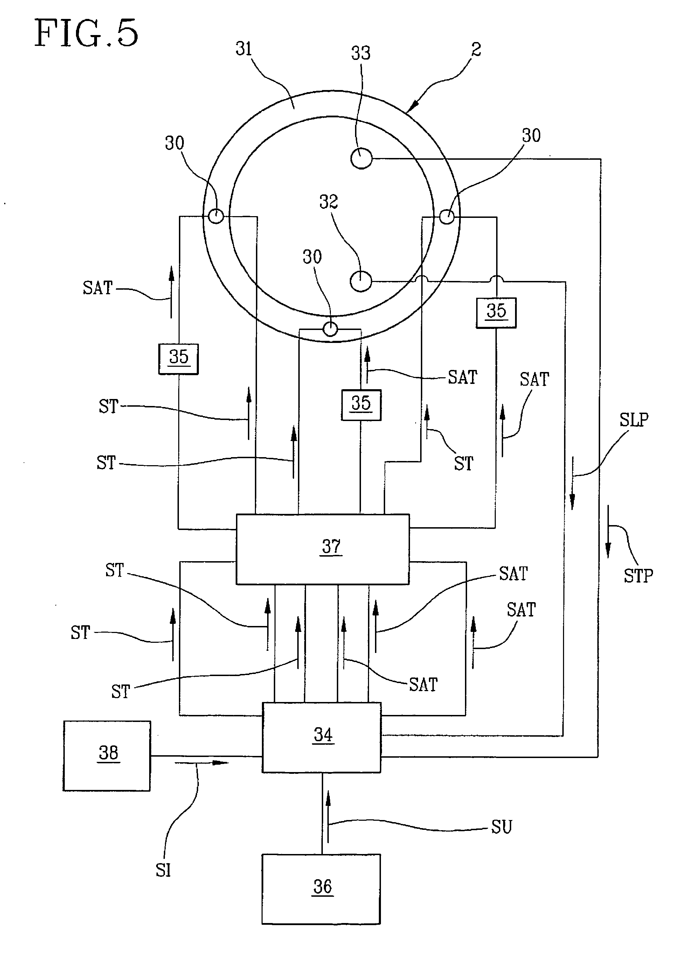

A control unit 34 (see Figure 5) is designed to process the data received from the sensors and to send corresponding signals SAR for activating or disabling the heating elements 30 so as to achieve predetermined temperature values for the mixture being processed according to the amount of mixture present.

In the preferred embodiment, the level sensor 33 is positioned in a portion of the cooking cylinder 2 located above a centre line which divides the cylinder into two halves, one upper and one lower. In this way, the level sensor 33 detects average cooking cylinder 2 fill levels, that is to say, fill levels greater than half the total capacity of the cylinder.

In this configuration, the temperature sensor 32 is integrated with another level sensor.

The additional level sensor, which as indicated is physically integrated in the temperature sensor 32, is positioned in the lower half of the cooking cylinder 2 and is designed to measure a low fill level, that is to say, less than the overall minimum capacity of the cylinder. In this way if the cooking cylinder 2 fill level is below the sensor 32, the latter does not send the control unit 34 the signal for consent to heat the heating element 30 positioned in the lower part of the cooking cylinder 2. It should be noticed that since the sensor 32 controls at least heating of the above-mentioned heating element positioned in the lower part of the cooking cylinder 2, the other heating elements 30 cannot be activated either.

The three heating elements 30 are equipped with protective devices 35 on the maximum temperatures they are able to reach, schematically illustrated in Figure 5, to prevent the heating elements 30 from burnout and to prevent temperatures which are too high from being reached in the mixture following a malfunction of the control unit 34.

The latter has a user interface 36 (schematically illustrated in Figure 4) indicating the type of processing to which the mixture must be subjected. The user interface 36 sends signals SU to the control unit 34, the signals being used as the basis for calculation of the optimum temperature which must be reached in the mixture.

Said signals SU are processed by the control unit 34 together with the signals STP, SLP sent by the sensors 32, 33 for correct generation of the signals SAT for activation of the heating elements 30.

A timer 37 (schematically illustrated in Figure 5) is connected to the control unit 34 and to the heating elements 30 and is designed to receive timer signals ST from the control unit and to send them to the heating elements 30 to activate them and disable them at predetermined time intervals. In this way, it is possible to achieve, monitor and vary a plurality of different temperature levels in the cooker.

The plurality of temperature levels is given by all of the possible combinations between activations of one or more heating elements and by the switch on and switch off time for each heating element.

As already indicated, the cooker 2 is equipped with a mixer (not illustrated). Said mixer is driven by an electric motor (not illustrated) controlled by an inverter 38 schematically illustrated in Figure 5. In the known way, the inverter 38 drives the cooker mixer with speeds of rotation which vary depending on requirements, that is to say, depending on the mixture being processed.

The inverter 38 is connected to the control unit 34 and sends the latter signals SI indicating the mixer speed of rotation.

Said signals SI sent to the control unit 34 by the inverter 38 are processed by the control unit in order to send the signals SAT for activation of the heating elements so as to increase or reduce the temperature of the mixture also according to the mixer speed of rotation.

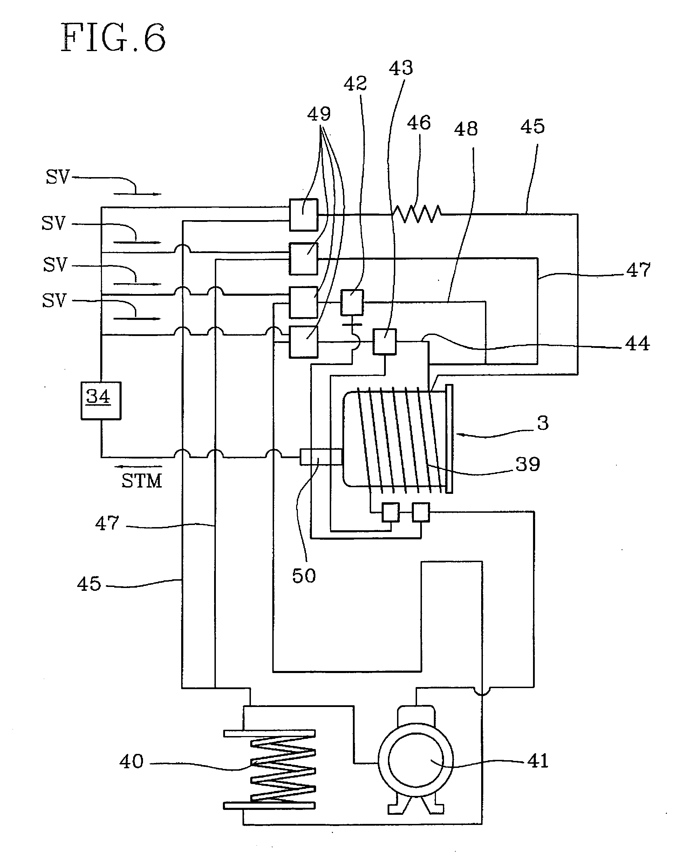

The machine 1 also comprises a refrigerating machine, whose main components are schematically illustrated in Figure 6.

The refrigerating machine comprises an evaporator 39, that is to say, a heat exchanger for producing cold, connected to the whipping and freezing cylinder 3, and a condenser 40 designed to extract from the cooling fluid the heat necessary to condense the fluid.

The difference in the pressure of the operating fluid between the condenser 40 and the evaporator 39 is guaranteed by a compressor 41.

The evaporator 39 is connected to the condenser 40 by a primary line 44 for the operating fluid.

Said primary line 44 is, therefore, a cold line, since it conveys cold operating fluid which will remove heat from the whipping and freezing cylinder 3.

Advantageously, an auxiliary line 45 for the operating fluid is located between the condenser 40 infeed and the evaporator 39 infeed, for introducing warm operating fluid into the evaporator.

In particular, the auxiliary line 45 draws warm operating fluid before it enters the condenser 40 and sends the fluid drawn into the evaporator 39 connected to the whipping and freezing cylinder 3. In this way, as well as cooling it, the whipping and freezing cylinder 3 may be heated.

It must be emphasised that the evaporator 39 is a dry system, that is to say, the evaporator 39 coils are closed in an aluminium casting in the shell of the whipping and freezing cylinder 3.

To increase the heating action of the auxiliary line 45, a temperature modulator element 46 is positioned along the auxiliary line to limit the temperature of the operating fluid to be introduced into the evaporator 39 (Figure 6).

The auxiliary line 45 and the primary line 44 comprise respective branches 47, 48 which, extending from the respective lines 45, 44 converge in the same point located upstream of the evaporator 39 infeed.

The two branches 47, 48 allow the cold operating fluid and the warm operating fluid to be mixed with each other, thus obtaining a mixture of operating fluid having an intermediate temperature between that of the primary line and that of the auxiliary line.

Along the primary line 44, the auxiliary line 45 and along the respective branches 47, 48 there are respective on-off valves 49 which regulate the flow of operating fluid flowing from the condenser 40 to the evaporator 39.

Said on-off valves 49 are controlled by the control unit 34 which sends them signals SV indicating the valve opening, closing or choking status.

It should be noticed that along the line 44 and along the line 48, downstream of the relative on-off valves 49, there are respective thermostat or thermal expansion valves, the one inserted along the line 48 being labelled 42 and the one inserted along the line 44 respectively being labelled 43. The latter in practice act as throttle elements. Each thermostat valve 42 and 43 is connected to a respective bulb 51, each of which is inserted downstream of the condenser 39 and designed to read the temperature of the fluid exiting the condenser 39 and to regulate the respective thermostat valve accordingly.

The control unit 34 generates the above-mentioned signal SV to be sent to the valves, processing a signal STM sent by a temperature sensor 50 operating inside the whipping and freezing cylinder 3.

In practice, based on the temperature necessary for a particular mixture being prepared, the control unit 34 controls the controlled opening of one or more of the on-off valves 49 and maintains the desired temperature by controlling the temperature inside the whipping and freezing cylinder 3 using feedback provided by the temperature sensor 50.

The invention described above is susceptible of industrial application and may be modified and adapted in several ways without thereby departing from the scope of the inventive concept. Moreover, all details of the invention may be substituted by technically equivalent elements.

The invention achieves the preset aims.

The second dispenser 7 allows food mixtures to be drawn directly from the cooker 2 without having to send them to the whipping and freezing cylinder 3. This feature allows the simultaneous production of food products requiring whipping and freezing, such as ice creams, and food products which do not need whipping and freezing.

In particular, a typical example of a production cycle involves pasteurising in the cooker 2 a mixture of food products intended for making ice cream, then transferring the mixture to the whipping and freezing cylinder 3.

During mixture whipping and freezing, the cooker 2 is used again to pasteurise a new mixture which does not require whipping and freezing.

The end result of the production cycle is simultaneous preparation of two food products using the same machine.

Moreover, the three heating elements 30 separated from each other by angles of between 60 and 120 degrees allow improved temperature distribution inside the cooker 2 and, by means of the control unit 34 allow the temperature inside the cooker 2 to be varied both depending on the amount of mixture present, and depending on the particular recipe necessary to process the mixture.

In addition, the auxiliary line for the refrigerating machine operating fluid, in combination with the primary line, allows the whipping and freezing cylinder to also be used to heat the mixture, thus allowing the implementation of any recipes.

Moreover, the on-off valves controlled by the control unit allow any temperature to be achieved inside the whipping and freezing cylinder and with practically negligible transients.

## Claims

1. A machine for making liquid and semi-liquid food products, comprising a cooking cylinder (2) with a horizontal axis (P), a whipping and freezing cylinder (3) with a horizontal axis (M) positioned below the cooker (2) and a feed line (4) comprising a first dispenser (5) for putting into fluid communication a cooker (2) outfeed (10) and a whipping and freezing cylinder (3) infeed (6), the machine being **characterised in that** the cooking cylinder (2) comprises at least three heating elements (30) extending parallel with the central axis (P) of the cooking cylinder (2), at the lateral wall (31) of the cylinder (2) and also being **characterised in that** the heating elements are separated from each other by angles of between 60 and 120 degrees relative to the central axis (P) of the cylinder (2) and that they are powered independently.

2. The machine according to claim 1, **characterised in that** it comprises at least one level sensor (33) and one temperature sensor (32) which are positioned at least partly inside the cooking cylinder (2); said sensors (32, 33) sending signals (STP, SLP) representing the values detected to a control unit (34) designed to process the signals and to send corresponding signals (SAT) representing operating parameters to the heating elements (30), thus obtaining predetermined temperature values of the mixture being processed depending on the amount of mixture present in the cooker (2).

3. The machine according to claim 2, **characterised in that** the temperature sensor (32) comprises another level sensor; said additional level sensor being positioned in a lower half of the cooking cylinder (2) for measuring cylinder (2) fill levels which are less than the minimum cylinder capacity allowed and the level sensor (33) being positioned in an upper half of the cooking cylinder (2) for measuring cylinder fill levels which are greater than half of the cylinder capacity.

4. The machine according to claim 2, **characterised in that** it comprises a timer (37) connected to the control unit (34) and to the heating elements (30) and designed to receive signals (ST) from the control unit and to send them to the heating elements (30) in order to activate and disable the heating elements (30) at predetermined time intervals.

5. The machine according to any of the claims from 2 to 4, **characterised in that** the cooker (2) comprises a blade-shaped mixer driven by an electric motor controlled by an inverter (38); the inverter (38) being connected to the control unit (34) so that it can send the latter signals (SI) representing the mixer speed of rotation.

6. The machine according to claim 5, **characterised in that** the signals (SAT) sent by the control unit (34) to the heating means (30) depend on the signals (SI) received by the control unit (34) and sent by the inverter (38), for increasing or reducing the temperature of the mixture depending on the mixer speed of rotation.

## Patentansprüche

1. Maschine zur Herstellung von flüssigen und halbflüssigen Lebensmittelprodukten, Folgendes beinhaltend: einen Kocherzylinder (2) mit horizontaler Achse (P), einen Schlag- und Gefrierzylinder (3) mit horizontaler Achse (M), der unterhalb des Kochers (2) angeordnet ist, und eine Zufuhrleitung (4), die eine erste Ausgabeeinrichtung (5) beinhaltet, zur Herstellung einer Fluidverbindung zwischen einem Auslauf (10) eines Kochers (2) und einem Zulauf (6) des Schlag- und Gefrierzylinders (3), wobei die Maschine **dadurch gekennzeichnet ist, dass** der Kocherzylinder (2) mindestens drei Heizelemente (30) beinhaltet, die sich parallel zur Mittelachse (P) des Kocherzylinders (2) an der Seitenwand (31) des Zylinders (2) erstrecken, und ferner **dadurch gekennzeichnet ist, dass** die Heizelemente jeweils um einen Winkel von 60 bis 120 Grad bezogen auf die Mittelachse (P) des Zylinders (2) voneinander beabstandet sind und dass sie unabhängig voneinander angetrieben werden.

2. Maschine nach Anspruch 1, **dadurch gekennzeichnet, dass** sie mindestens einen Füllstandssensor (33) und einen Temperatursensor (32) beinhaltet, die zumindest teilweise in dem Kocherzylinder (2) angeordnet sind; wobei diese Sensoren (32, 33) die erfassten Werte darstellende Signale (STP, SLP) an eine Steuereinheit (34) senden, die dafür ausgelegt ist, die Signale zu verarbeiten und entsprechende, Betriebsparameter darstellende Signale (SAT) an die Heizelemente (30) zu senden, um vorgegebene Temperaturwerte der verarbeiteten Mischung in Abhängigkeit von der im Kocher (2) vorhandenen Mischungsmenge zu erhalten.

3. Maschine nach Anspruch 2, **dadurch gekennzeichnet, dass** der Temperatursensor (32) einen weiteren Füllstandssensor beinhaltet; wobei dieser zusätzliche Füllstandssensor in einer unteren Hälfte des Kocherzylinders (2) angeordnet ist, um Füllstände im Zylinder (2) zu messen, die niedriger sind als die zulässige Mindestfüllmenge des Zylinders und der Füllstandssensor (33) in einer oberen Hälfte des Kocherzylinders (2) angeordnet ist, um Zylinderfüllstände zu messen, die höher sind als die Hälfte des zulässigen Zylinderfassungsvermögens.

4. Maschine nach Anspruch 2, **dadurch gekennzeichnet, dass** sie eine Zeitschaltuhr (37) beinhaltet, die mit der Steuereinheit (34) und den Heizelementen (30) verbunden ist und dafür ausgelegt ist, Signale (ST) von der Steuereinheit zu empfangen und diese an die Heizelemente (30) zu senden, um die Heizelemente (30) zu vorgegebenen Zeitintervallen zu aktivieren und zu deaktivieren.

5. Maschine nach einem der Ansprüche von 2 bis 4, **dadurch gekennzeichnet, dass** der Kocher (2) ein blattförmiges Rührwerk beinhaltet, das durch einen Elektromotor angetrieben wird, der von einem Umrichter (38) gesteuert wird; wobei der Umrichter (38) mit der Steuereinheit (34) verbunden ist, so dass er an die zuletzt genannte die Rührwerkdrehzahl darstellende Signale (SI) senden kann.

6. Maschine nach Anspruch 5, **dadurch gekennzeichnet, dass** die Signale (SAT), die von der Steuereinheit (34) an die Heizmittel (30) gesendet werden, von den Signalen (SI) abhängig sind, die von der Steuereinheit (34) empfangen und von dem Umrichter (38) ausgesendet werden, um die Temperatur der Mischung in Abhängigkeit von der Rührwerkdrehzahl zu erhöhen oder zu verringern.

## Revendications

1. Une machine de fabrication de produits alimentaires liquides et semi-liquides, comprenant un cylindre de cuisson (2) présentant un axe horizontal (P), un cylindre de fouettage et de réfrigération (3) présentant un axe horizontal (M) et positionné au-dessous du cuiseur (2) et une ligne d'alimentation (4) comprenant un premier distributeur (5) pour mettre en communication de fluide une sortie (10) du cuiseur (2) et une entrée (6) du cylindre de fouettage et de réfrigération (3), la machine étant **caractérisée en ce que** le cylindre de cuisson (2) comprend au moins trois éléments chauffants (30) s'étendant parallèlement à l'axe central (P) du cylindre de cuisson (2), au niveau de la paroi latérale (31) du cylindre (2), et étant également **caractérisée en ce que** les éléments chauffants sont séparés les uns des autres par des angles compris entre 60 et 120 degrés par rapport à l'axe central (P) du cylindre (2) et **en ce qu'**ils sont alimentés séparément.

2. La machine selon la revendication 1, **caractérisée en ce qu'**elle comprend au moins un capteur de niveau (33) et un capteur de température (32) qui sont positionnés au moins partiellement à l'intérieur du cylindre de cuisson (2) ; lesdits capteurs (32, 33) envoyant des signaux (STP, SLP) représentant les valeurs détectées à une unité de contrôle (34) destinée à traiter les signaux et à envoyer des signaux (SAT) correspondants représentant des paramètres de fonctionnement aux éléments chauffants (30), afin d'obtenir des valeurs de température prédéfinies du mélange en cours de traitement en fonction de la quantité de mélange présente dans le cuiseur (2).

3. La machine selon la revendication 2, **caractérisée en ce que** le capteur de température (32) comprend un autre capteur de niveau ; ledit autre capteur de niveau étant positionné dans une moitié inférieure du cylindre de cuisson (2) pour mesurer des niveaux de remplissage du cylindre (2) qui sont inférieurs à la capacité minimum admise dudit cylindre, et le capteur de niveau (33) étant positionné dans une moitié supérieure du cylindre de cuisson (2) pour mesurer des niveaux de remplissage du cylindre qui sont supérieurs à la moitié de la capacité dudit cylindre.

4. La machine selon la revendication 2, **caractérisée en ce qu'**elle comprend un temporisateur (37) relié à l'unité de contrôle (34) et aux éléments chauffants (30) et destiné à recevoir des signaux (ST) provenant de l'unité de contrôle et à les envoyer aux éléments chauffants (30) de manière à activer et désactiver ces mêmes éléments chauffants (30) à des intervalles de temps prédéfinis.

5. La machine selon l'une quelconque des revendications de 2 à 4, **caractérisée en ce que** le cuiseur (2) comprend un mélangeur à pales actionné par un moteur électrique commandé par un variateur de vitesse (38) ; le variateur de vitesse (38) étant relié à l'unité de contrôle (34) de manière à pouvoir envoyer à celle-ci des signaux (SI) représentant la vitesse de rotation du mélangeur.

6. La machine selon la revendication 5, **caractérisée en ce que** les signaux (SAT) envoyés par l'unité de contrôle (34) aux moyens chauffants (30) dépendent des signaux (SI) reçus par l'unité de contrôle (34) et envoyés par le variateur de vitesse (38), pour augmenter ou réduire la température du mélange en fonction de la vitesse de
